# EUROPEAN PATENT APPLICATION

(11) **EP 0 937 493 A2**
(43) Date of publication of application: **25.08.1999**
(21) Application number: 99200409.3
(22) Date of filing: 12.02.1999
(51) Int. Cl.: B01D 63/04, B01D 65/00

(54) **Filtering device**

(30) Priority: 20.02.1998 NL 1008381
(71) Applicant: X-Flow B.V., NL-7602 KK Almelo (NL)
(72) Inventor: Blume, Ingo, 7555 ND Hengelo (NL); Roesink, Hendrix Dirk Willem, 7623 AJ Borne (NL)
(74) Representative: Kupecz, A., Drs. c.s.

(57) **Abstract**

The invention relates to a filtering device comprising a pressure vessel provided with a feed connection and a filtrate connection, and one or more capillary filtration membrane modules, said membrane modules comprising an inlet coupled with the feed connection, an outlet coupled with the filtrate connection, and a filter housing provided with a membrane compartment accommodating a bundle of capillary filtration membranes, and said capillary filtration membranes being cased at both ends of the membrane module in membrane holders. At least one of the membrane modules is provided with at least one feed-through conduit extending substantially in the longitudinal direction through the membrane module.

## Description

The invention relates to a filtering device comprising a pressure vessel provided with a feed connection and a filtrate connection, and one or more capillary filtration membrane modules, said membrane modules comprising an inlet coupled with the feed connection, an outlet coupled with the filtrate connection, and a filter housing provided with a membrane compartment accommodating a bundle of capillary filtration membranes, and said capillary filtration membranes being cased at both ends of the membrane module in membrane holders.

Such a filtering device is known in practice. In said known filtering device a number of membrane modules is serially connected in a pressure vessel, with the wall of the membrane modules, the filter housing, fitting closely to the wall of the pressure vessel. Via the pressure vessel's feed connection, the medium to be filtered, for example a liquid, enters a first open end of the capillary filtration membranes (the inlet of the membrane module) of a, in the flow direction, first membrane module. The filtered liquid, the permeate or filtrate, that has passed the membrane wall can exit the membrane module via its outlet, to be eventually discharged from the pressure vessel via its filtrate connection. In a practical embodiment of the pressure vessel, both the feed connection and the filtrate connection may comprise different connective points. Liquid that has not been filtered in this first module, will exit the capillary filtration membranes at a second open end to be fed to an inlet of a, in the flow direction, following membrane module. This results in a pressure reduction occurring with each successive membrane module due to the flow resistance caused by the capillary filtration membranes. This can be avoided by using capillary filtration membranes with a large inside diameter, at the expense of the size of the available filtration surface in a membrane module. The consequence of the pressure reduction with each consecutive membrane module is that the trans-membrane pressure across the capillary filtration membrane walls with (in the flow direction) each consecutive membrane module decreases, thereby lowering the filtration performance of each consecutive membrane module.

In addition, the capillary filtration membranes require periodic flushing to remove contamination from the membrane wall. This is done by reversing the flow direction of the liquid. The liquid will now pass through the membrane wall from the outside to the inside, carrying with it any contamination retained in and/or on the membrane wall. This liquid containing the contamination will exit the capillary filtration membranes via the first open end, after which it has to flow through the capillary filtration membranes of a, in the flow direction, following membrane module. However, it is rather difficult to remove the contamination from the membrane modules and the pressure vessel in this manner. This is especially the case with the membrane modules which during flushing are farthest removed from the feed connection acting as flush outlet.

The pressure drop over a membrane module also results in a reduction of the trans-membrane pressure in a single membrane module in the flow direction through the capillary filtration membranes with the flow approaching one of its ends. Due to the flow resistance caused by the capillary filtration membrane, the trans-membrane pressure will be higher at the entrance of the capillary filtration membrane than at its exit. This uneven trans-membrane pressure in the individual capillary filtration membranes lowers the filtration performance of a single module.

It is the object of the invention to eliminate the above-mentioned disadvantages. To this end the invention provides a filtering device, characterized in that at least one of the membrane modules is provided with at least one feed-through conduit extending substantially in the longitudinal direction through the membrane module. Depending on the specific circumstances, the option is to use only one or a few membrane modules provided with such feed-through conduit, or to apply a filtering device in which all membrane modules are provided with such feed-through conduits. The feed-through conduits must be sufficiently large so that there is no, or only a slight flow resistance, and a decline in performance due to pressure reductions is prevented.

In a favourable embodiment the feed-through conduit is a pipe located inside the membrane compartment. When more than one feed-through conduit is used, this will mean that more than one pipe is provided. The manufacture and installation of such a pipe or pipes is simple.

In another easily realizable embodiment a feed-through conduit is provided, annularly surrounding the membrane compartment. The walls of the annular feed-through conduit may then be formed by the filter housing and a wall of the pressure vessel, thereby alleviating the necessity for an extra wall in the membrane module to form the feed-through conduit. In that case it is preferred that spacers are provided between the wall of the pressure vessel and the filter housing. This allows the membrane module to be firmly positioned in the pressure vessel. The spacers may either be attached to the wall of the pressure vessel or to the filter housing.

The walls of the feed-through conduit coming into contact with the membrane compartment may be made from a porous material or from the same material as the capillary filtration membranes. Preferably, however, the walls of the feed-through conduit are made from a non-porous, rigid material with a smooth surface. This renders the feed-through conduit mechanically more stable, while the smooth, nonporous surface to a large degree prevents the accretion of solids on the walls of the feed-through conduit. By this means the flow resistance of the feed-through conduit will hardly increase with use and time.

The invention will now be elucidated with reference to the appended drawings in which identical or similar parts are indicted by the same reference numbers, and in which:
- Fig. 1 is a schematic illustration of a pressure vessel comprising membrane modules;
- Fig. 2 is a longitudinal view of a pressure vessel comprising two different membrane modules according to the invention; and
- Figs 3, 4 and 5 show cross sections of different membrane modules according to the invention.

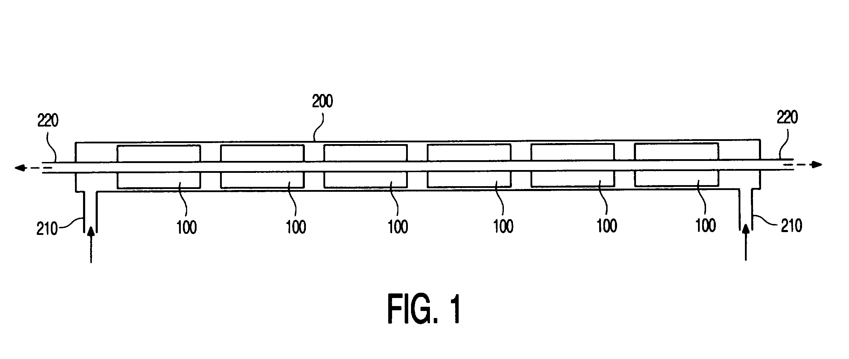

An embodiment of a pressure vessel 200 used in practice is schematically illustrated in Fig. 1. The pressure vessel 200 shown comprises six membrane modules 100, although more or fewer membrane modules may also be comprised. If the length of the pressure vessel 200 is, for example, 6 to 8 metres, the length of the membrane modules would be approximately 0.5 to 4 metres. Usually a membrane module will be 1 to 1.5 metres long. However, these lengths may vary in practice. The pressure vessel 200 shown in Fig. 1 possesses a feed connection 210 formed by two connective points, and a filtrate connection 220 formed by two connective points. During filtration the direction of flow of liquid to be filtered through the three membrane modules 100 at the left side of the pressure vessel will be from left to right, and through the three membrane module 100 at the right side from right to left.

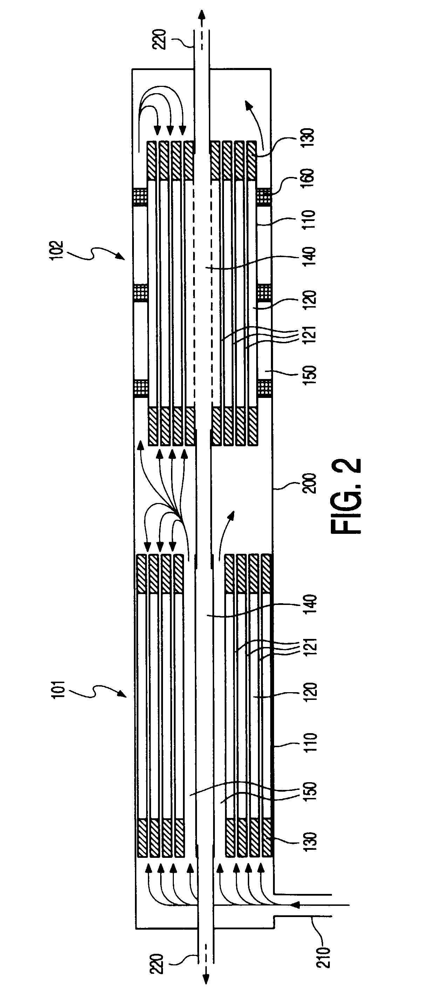

The filtering device illustrated in Fig. 2 comprises a pressure vessel 200 having a feed connection 210 for the liquid to be filtered, formed by one connective point, and a filtrate connection 220 for the filtered liquid (the permeate or filtrate), formed by two connective points. For illustration purposes, the pressure vessel 200 in Fig. 2 comprises two different membrane modules 101, 102. However, in practice the number of membrane modules will be larger, as shown in Fig. 1, and the membrane modules will be identical. It is also possible that only one membrane module is used in a pressure vessel. For good positioning of the membrane module 101 inside the pressure vessel 200, the filter housing 110 of the membrane module 101 fits closely to the inside wall of the pressure vessel 200, leaving no, or hardly any space between them. Inside the pressure vessel 200, spacers are used to position the membrane module 102 between the inside wall of the pressure vessel 200 and the filter housing 110.

Inside the filter housing 110, a membrane compartment 120 comprises a bundle of capillary filtration membranes 121 which, at both ends of the membrane module 100, are cased in membrane holders 130. In practice, said capillary filtration membranes will usually be micro or ultrafiltration membranes. Further a permeate discharge compartment 140 and feed-through conduits 150 are provided. The membrane holders 130 close off the space between the capillary filtration membranes 121, the filter housing 110, the permeate discharge compartment 140 and the feed-through conduits 150. In the embodiment shown, the membrane holders 130 are formed from a resin applied in the membrane module, in which resin the capillary filtration membranes 121 are embedded. In the embodiment of the membrane module shown, both ends of the capillary filtration membranes are open.

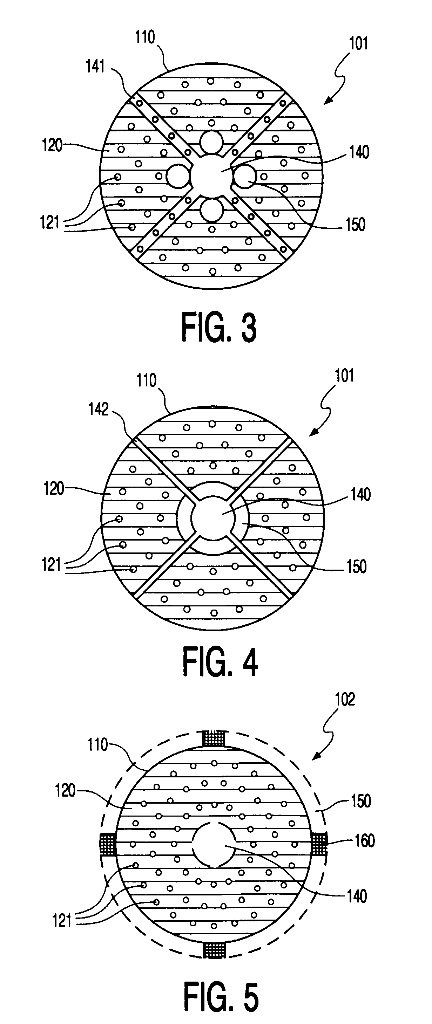

Possible cross sections of the membrane module 101, illustrated in Fig. 2 as a longitudinal section, are shown in Figs. 3 and 4. These figures also show permeate discharge pipes 141 and permeate discharge lamellae 142 respectively.

The liquid to be filtered and which, via the feed connection 210, is let in from the pressure vessel 200, will flow into the capillary filtration membranes 121. The effect of a difference in pressure over the membrane wall, the trans-membrane pressure, and the properties of the membrane, allow a portion of the liquid to pass through the membrane wall. Via the permeate discharge pipes 141 or the permeate discharge lamellae 142, said portion of the liquid, the permeate, is able to reach the permeate discharge compartment 140, and is subsequently discharged to the filtrate connection 220. In Figs. 1 and 2 the flow of the liquid to be filtered is indicated by a solid-line arrow, and the flow of the permeate is indicated by a dashed-line arrow. The permeate discharge compartments of the various membrane modules are in communication with one another.

With the membrane modules according to the prior art, the liquid to be filtered is able to reach a, in the flow direction, following membrane module only via the capillary filtration membranes of preceding membrane modules. If the inside diameter of the capillary filtration membranes is small, the consequence will be a considerable pressure drop over the membrane module, so that the trans-membrane pressure at the, in flow direction, following module will be lower. In order to avoid this, the membrane module according to the invention is provided with a feed-through conduit 150 for the liquid to be filtered. Via the feed-through conduit 150 a, in flow direction, following membrane module will receive the liquid to be filtered from a preceding membrane module.

Another advantage is that also the right-hand sides of the capillary filtration membranes of the membrane modules shown in Fig. 2, are supplied with liquid to be filtered. The result is an extremely constant pressure inside the individual capillary filtration membranes 121, so that the trans-membrane pressure in the longitudinal direction of the individual capillary filtration membranes will not or only slightly decrease. This improves the filtration performance of the membrane module. In that case it may be advantageous to provide all the membrane module comprised in a filtering device with feed-through conduits. When considering this option, an optimum must be found between a loss of membrane surface due to the incorporation of the feed-through conduit, and the elimination of pressure drops due to the addition of said feed-through conduits.

In the cross-sectional view of the membrane module 101 shown in Fig. 3, the filter housing comprises four feed-through conduits 150 in communication with the permeate discharge compartment 140. The round pipes for the permeate discharge compartment 140 and the four feed-through conduits 150 can now be manufactured together with the permeate discharge pipes 141 as one unit, and placed in the filter housing 110. This constitutes a convenient method of manufacture. After the unit of pipes has been placed, the capillary filtration membranes and the membrane holders can be installed. The total cross-sectional area of the feed-through conduits 150 should be chosen such as to obtain an optimum for both the available membrane surface and the feed-through performance of the feed-through conduits 150. Alternatively, the feed-through conduits 150 may be distributed differently in the filter housing 110. It is also possible to use more or fewer feed-through conduits.

In the membrane module 101 shown in cross section in Fig. 4, permeate discharge lamellae 142 are used to convey permeate from the membrane compartment 120 to the permeate discharge compartment 140. In this embodiment a discharge lamella 142 is clamped between two feed-through conduits 150 to fix the discharge lamella 142. Fig. 4 shows four discharge lamellae 142 and four feed-through conduits 150. This aggregate of lamellae and feed-through conduits can also be assembled as a unit prior to being placed into the filter housing. It can also be seen that the space enclosed by the various feed-through conduits 150 forms a permeate discharge compartment 140.

The membrane module 102 shown in Figs. 2 and 5 in a longitudinal and cross-sectional view respectively, comprises at the outside of the filter housing 110 spacers 160. By placing the membrane module 102 into the pressure vessel 200, a feed-through conduit 150 is formed by the space enclosed by the filter housing 110 and the wall of the pressure vessel 200. In this embodiment the feed-through conduit 150 surrounds the membrane compartment 120 annularly. The spacers 160 may also be formed differently from those illustrated, for example, as strips extending longitudinally along the filter housing 110, or they may be provided on the wall of the pressure vessel 200. It is also possible to place an extra housing around the filter housing 110 and the spacers 160, thereby forming a feed-through conduit 150 between said housing and the filter housing 110.

In addition to improving the supply of liquid to be filtered to the various membrane modules in a pressure vessel, cleaning of the membrane modules in the pressure vessel by reversal the the liquid flow is also clearly improved. To this end flushing liquid is fed via the filtrate connection 220 and the permeate discharge compartments 140 to the capillary filtration membranes 121. The contamination that is retained in and/or on the membrane wall when filtering, is now flushed from and/or off the membrane wall, to be discharged through the capillary filtration membranes 121. The contamination is subsequently further discharged from the pressure vessel, through a, in flushing direction, following membrane module. The contamination does not need to pass through the capillary filtration membranes of said following membrane module, which would render cleaning more difficult, as is the case with membrane modules according to the prior art.

The walls of the feed-through conduit 150 coming into contact with the membrane compartment may be manufactured from a porous material of from the same material as the capillary filtration membranes. In the latter case, this means for the embodiment shown in Fig. 3 that a tubular filtration membrane having a large diameter is used, which in this case serves mainly as feed-through conduit. In accordance with the illustrated embodiments, however, the walls of the feed-through conduits 150 are made from a rigid material to provide good mechanical stability. The material is not porous and has a smooth surface, so that accretion of solids is prevented to a large degree. Such accretion would have an adverse effect on the flow resistance of the feed-through conduits.

The filter housing, the discharge compartment, the feed-through conduits, and the like have to be manufactured from a material that is inert to the medium to be filtered. This material may, for example, be a plastic such as PVC or nylon, but a metal or other material is also possible. Generally, however, a suitable plastic is preferred, since this can be processed more easily and cheaper.

The embodiments described above must not be understood as restrictions on the invention. The filtration membrane module may be realized in a variety of embodiments all within the scope of the present invention and the appended claims.

## Claims

1. A filtering device comprising a pressure vessel provided with a feed connection and a filtrate connection, and one or more capillary filtration membrane modules, said membrane modules comprising an inlet coupled with the feed connection, an outlet coupled with the filtrate connection, and a filter housing provided with a membrane compartment accommodating a bundle of capillary filtration membranes, and said capillary filtration membranes being cased at both ends of the membrane module in membrane holders, **characterized** in that at least one of the membrane modules is provided with at least one feed-through conduit extending substantially in the longitudinal direction through the membrane module.

2. A filtering device according to claim 1, **characterized** in that the feed-through conduit is a pipe located inside the membrane compartment.

3. A filtering device according to claim 1 or 2, **characterized** in that a feed-through conduit is provided, annularly surrounding the membrane compartment.

4. A filtering device according to claim 3, **characterized** in that the walls of the annular feed-through conduit are formed by the filter housing and a wall of the pressure vessel.

5. A filtering device according to claim 4, **characterized** in that spacers are provided between the wall of the pressure vessel and the filter housing.

6. A filtering device according to one of the preceding claims, **characterized** in that the walls of the feed-through conduit are made from a non-porous, rigid material with a smooth surface.

7. A capillary filtration membrane module according to one of the preceding claims.
